# EUROPEAN PATENT SPECIFICATION

(11) **EP 4 513 468 B1**
(45) Date of publication and mention of the grant of the patent: **21.10.2026**
(21) Application number: 24189691.9
(22) Date of filing: 19.07.2024
(51) Int. Cl.: G08G 5/32

(54) **FLIGHT PLAN ROUTE PREDICTION METHOD AND DEVICE BASED ON ROUTE POINT STATISTICS IN PREVIOUS FLIGHT PLAN**
FLUGPLANROUTENVORHERSAGEVERFAHREN UND -VORRICHTUNG AUF BASIS VON ROUTENPUNKTSTATISTIKEN IN EINEM VORHERGEHENDEN FLUGPLAN
PROCÉDÉ ET DISPOSITIF DE PRÉDICTION D'ITINÉRAIRE DE PLAN DE VOL BASÉS SUR DES STATISTIQUES DE POINT DE TRAJET DANS UN PLAN DE VOL PRÉCÉDENT

(30) Priority: 25.08.2023 KR 20230112006
(43) Date of publication of application: 26.02.2025
(73) Proprietor: Korea Aerospace Research Institute, Daejeon 34133 (KR)
(72) Inventor: KIM, Hyounkyoung, 34090 Daejeon (KR); JEON, Daekeun, 34049 Daejeon (KR); OH, Eun-Mi, 34061 Daejeon (KR); EUN, Yeonju, 34127 Daejeon (KR); JEONG, Myeongsook, 34200 Daejeon (KR)
(74) Representative: Haseltine Lake Kempner LLP

(56) References cited:
- CN-A- 114 877 907
- US-A1- 2010 191 458
- US-B1- 6 314 362

## Description

### CROSS-REFERENCE TO RELATED APPLICATION

This application claims the benefit of Korean Patent Application No. 10-2023-0112006 filed on August 25, 2023, in the Korean Intellectual Property Office.

### BACKGROUND

### 1. Field of the Invention

The present disclosure relates to an air traffic data processing system (an air traffic flow control system, a flight plan processing system, an air traffic simulation system, etc.) for generating or utilizing flight plan material and relates to a method and device for predicting a flight plan route based on route point statistics from of previous flight plans to predict and generate a flight plan route standardized based on a route point.

### 2. Description of the Related Art

Korean Patent No. 2023-0032309 (March 7, 2023): Method of determining path of unmanned moving object in a flight airspace using reinforcement learning

The Korean Patent No. 2023-0032309 discloses a method of generating and automating a corrected flight route through multi-dimensional environment information by recognizing environment information, such as a building, an object, and a terrain height in a flight space, and deriving an optimal flight route behavior pattern through reinforcement learning.

US 2010/191458 A1 relates to discloses a computer-implemented system and method for the processing and optimization of flight plans.

CN 114 877 907 A describes a map route planning method, electronic device, and storage medium.

U 6 314 362 B1 describes a method and system for a new automation tool for en route air traffic controllers.

The air traffic flow control system or the air traffic simulation may require information on an expected route of an aircraft to predict an air traffic condition or simulate an air traffic condition in near future (tomorrow to one month).

Flight information used for the flow control and the air traffic simulation of in an airspace may include approximate regular seasonal schedule information provided twice a year at a six-month interval and flight plans submitted to a control center from an airline company before operating the aircraft.

In the schedule information, a flight number, a departure airport and an arrival airport, and a departure time may be included, and in the flight plan, a flight plan route (Planned_Route) in addition to the schedule information may be included.

Since the flight plan is typically submitted three hours before the flight, the prediction or simulation of air traffic in a situation in which the flight plan is not submitted (a situation after three hours from the current time) may need to depend on the schedule information submitted by the airline company.

However, it is difficult to accurately predict a route on which an aircraft moves and time information only with the schedule information without a flight plan route.

A virtual flight plan route (hereinafter, also referred to as a "virtual route") may be applied to a flight provided with the schedule information.

To apply the virtual route, a user (a controller) may need to manually input the virtual route based on previous control experience or for the same flight number of a flight having the same combination of the departure airport and arrival airport, a flight plan route included in previous flight plans may be statistically analyzed and applied.

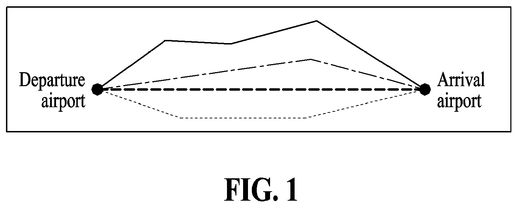

FIG. 1 is a diagram illustrating a conventional example of estimating a virtual route.

As shown in FIG. 1, a conventional virtual route may be generated by a combination of a departure airport and an arrival airport based on statistics of a flight plan route included in previous flight plans.

In FIG. 1, three routes from the departure airport to the arrival airport may be generated as virtual routes. In this case, the generated virtual route may be three-dimensional (3D) information including latitude, longitude, and altitude information.

For the conventional virtual route, a statistically most important route in accumulated data may be selected.

The selected flight plan route may require an analysis of expression standardization, error correction, etc.

The conventional virtual route may be the simplest method of predicting a flight route based on statistics and may compare flight routes in a text format and use a flight route with the most same phrases.

However, the conventional virtual route may have a problem in that a route is not found by text comparison because a display format is different even if the route is the same.

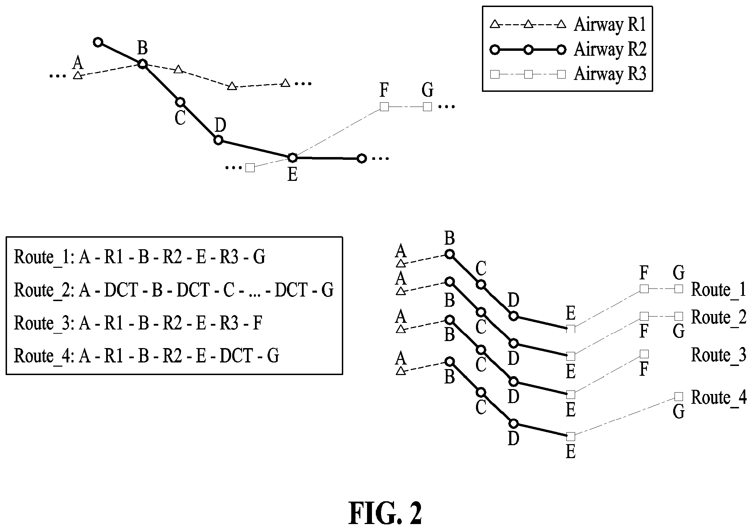

FIG. 2 is a diagram illustrating an example of displaying a flight plan route as a string.

As shown in FIG. 2, Route_1 and Route_2 may be different in text, but actually, may refer to the same route.

In addition, Route_1 and Route_4 may be similar in text, but may refer to different routes.

In other words, the flight plan route displayed as a string may have the problem that the flight plan route may frequently include a typo because it is manually inputted by a user from an airline company, and even if the routes are semantically the same, the format may be different from each other because a conventional input scheme of the airline company is different; and even if the format seems similar, a semantically significant difference may exist.

Accordingly, there is a desperate demand for an improved model for writing and predicting a standardized virtual flight plan route.

### SUMMARY

The present invention is defined by the appended claims.

### BRIEF DESCRIPTION OF THE DRAWINGS

These and/or other aspects, features, and advantages of the invention will become apparent and more readily appreciated from the following description of embodiments, taken in conjunction with the accompanying drawings, of which:
FIG. 1 is a diagram illustrating a conventional example of estimating a virtual route;
FIG. 2 is a diagram illustrating an example of displaying a flight plan route as a string;
FIG. 3 is a block diagram illustrating a configuration of a flight plan route prediction device based on statistics of route points of previous flight plans according to an embodiment of the present disclosure;
FIG. 4 is a diagram illustrating an example of predicting a virtual route according to the present disclosure; and
FIG. 5 is a flowchart illustrating a method of predicting a flight plan route based on statistics of route points of previous flight plans according to an embodiment of the present disclosure.

### DETAILED DESCRIPTION

Hereinafter, embodiments will be described in detail with reference to the accompanying drawings. However, various alterations and modifications may be made to the embodiments. Here, the embodiments are not meant to be limited by the descriptions of the present disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. In the description of embodiments, detailed descriptions of well-known related structures or functions will be omitted when it is deemed that such description will cause an ambiguous interpretation of the present disclosure.

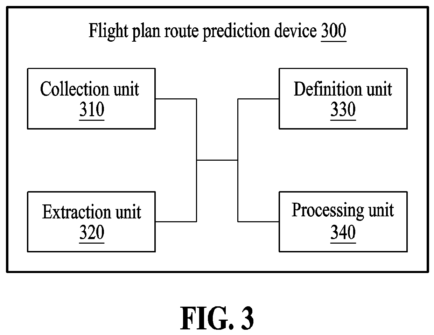

FIG. 3 is a block diagram illustrating a configuration of a flight plan route prediction device based on statistics of route points of previous flight plans according to an embodiment of the present disclosure.

Referring to FIG. 3, a flight plan route prediction device 300 based on statistics of route points of previous flight plans (hereinafter, referred to as a "flight plan route prediction device") according to an embodiment of the present disclosure includes a collection unit 310, an extraction unit 320, a definition unit 330, and a processing unit 340.

Firstly, the collection unit 310 collects a pre-written flight plan route from a database. In other words, the collection unit 310 serves to retrieve a pre-written flight plan route, which was written at a predetermined time in the past and is maintained in a database, from the database.

The database stores a pre-written flight plan route consisting of multiple strings including the velocity and altitude of an aircraft for each flight. In this case, even if the velocity and altitude information, which is the first string, of the flight is different, the pre-written flight plan route is grouped and matched with other flight plan routes having the same strings.

The extraction unit 320 performs a syntax analysis on the pre-written flight plan route and may extract a plurality of strings. In other words, the extraction unit 32C serves to segment a string, which is a component of the pre-written flight plan route, into multiple strings by analyzing and parsing a grammatical structure of the pre-written flight plan route.

In the extraction of strings, the extraction unit 320 extracts strings based on the spacing through the syntax analysis. In other words, the extraction unit 320 extracts a word separated by spaces from the pre-written flight plan route.

For example, the extraction unit 320 performs a syntax analysis on the pre-written flight plan route "N0449A110 DCT BESNAY209 FRAIZ DCT A582 HKC Y14" and extracts strings "N0449A110", "DCT", "BESNAY209", "FRAIZ", "DCT", "A582", "HKC", and "Y14" based on spaces.

In addition, the extraction unit 320 searches aeronautical information publication (AIP) for the extracted strings and determines whether the string is significant in the flight plan route.

For example, the extraction unit 320 classifies the strings, "FRAIZ", "A582", "HKC", and "Y14", which are found in the AIP, as significant strings.

In this case, the AIP is the publication containing essential flight information for air navigation. The AIP is issued according to an international standard and is distributed to aviation workers and related institutions as a paper or electronic document.

On the other hand, the extraction unit 320 classifies a string that is not found in the AIP as a spacing error.

Thereafter, the extraction unit 320 extracts, from the string classified as the spacing error, n numbers (the n is a natural number less than or equal to 3) continued from one alphabet as an independent string.

In the example described above, the extraction unit 32C classifies the string "BESNAY209" that is not found in the AIP as a spacing error and from the string "BESNAY209", extracts an alphabet and three following numbers, which are Y209, as an independent string. In this case, the extraction unit 320 searches the AIP for Y209 and classifies Y209 as a significant string. In addition, the extraction unit 320 also searches the AIP for the remaining "BESNA" and classifies BESNA as a significant string.

The definition unit 330 defines a route point from the plurality of strings. In other words, the definition unit 330 serves to read a unique attribute possessed by each string and identifies a string that represents a route point.

Specifically, the definition unit 330 identifies an attribute value from each of the plurality of strings based on the AIP, and defines a string, of which the attribute value is identified as a "point", as the route point.

In addition, the definition unit 330 defines a string, of which the identified attribute value is an "airway", as an airway.

In the example described above, by assigning an attribute value to an extracted string, the definition unit 330 defines route points, "BESNA" (Point), "FRAIZ" (Point), "HKC" (Point) and also defines airways, "Y209" (Airway), "A582" (Airway), and "Y14" (Airway).

Depending on the embodiment, the definition unit 330 defines the route point for the plurality of strings extracted in association with the pre-written flight plan route having the same first string.

For example, the definition unit 330 defines the route points, "BESNA" (Point), "FRAIZ" (Point), "HKC" (Point), for the plurality of strings extracted in association with multiple pre-written flight plan routes starting with the first string "N0449A110".

Through this, the definition unit 330 defines a route point for a route point extracted from a pre-written flight plan route that matches the remaining part other than the first string and writes a flight plan route to pass a route point that does not consider altitude and velocity information.

The processing unit 340 predicts a virtual flight plan route by positioning an airway between a pair of route points. In other words, the processing unit 340 serves to write a virtual flight plan route on which an aircraft travels by placing the airway between defined route points.

In this case, in preparing the flight plan route, the definition unit 330 adds altitude and velocity information, which is the first string, by using an average value of unused altitude and velocity information.

In the prediction of the virtual flight plan route, the processing unit 340 writes the virtual flight plan route by arranging a pair of route points by considering the order in which route points are arranged.

For this, the processing unit 340 recognizes the arrangement order of route points according to a flight direction on the airway based on the AIP.

In the example described above, the processing unit 340 recognizes the arrangement order of route points in the order of "BESNA" (Point), "FRAIZ" (Point), and "HKC" (Point), based on the AIP.

In addition, the processing unit 340 recognizes the arrangement order of airways in the order of "Y209" (Airway), "A582" (Airway)', and "Y14" (Airway), based on the AIP.

In addition, the processing unit 340 expresses a partial route by positioning the string, of which the attribute value is identified as the "Airway", between a pair of strings of which the arrangement order is adjacent to each other.

For example, the processing unit 340 expresses a first partial route "BESNAY209 FRAIZ" by positioning the airway "Y209" (Airway) between the route point "BESNA" (Point) and the adjacent route point "FRAIZ" (Point) according to the arrangement order.

In addition, the processing unit 340 expresses a second partial route "FRAIZ A582 HKC" by positioning the airway "A582" (Airway) between the route point "FRAIZ" (Point) and the adjacent route point "HKC" (Point) according to the arrangement order.

In addition, the processing unit 340 expresses a third partial route "HKC Y14 TGE" by positioning the airway "Y14" (Airway) between the route point "HKC" (Point) and the adjacent route point "TGE" (Point) according to the arrangement order.

Thereafter, the processing unit 340 writes the virtual flight plan route by concatenating the partial routes by considering the arrangement order.

The partial route is expressed by a front route point, of which the arrangement order is early, the airway, and a rear route point of which the arrangement order is late and which is adjacent to the front route point.

As the rear route point of the first partial route matches the front route point of the second partial route, the processing unit 340 writes the virtual flight plan route by concatenating the second partial route after the first partial route.

For example, the processing unit 340 writes the virtual flight plan route "BESNA Y209 FRAIZ A582 HKC" by concatenating the first partial route "BESNA Y209 FRAIZ" and the second partial route "FRAIZ A582 HKC" of which the rear route point and the front route point match each other.

In another embodiment, when the airway of the second partial route matches the airway of the first partial route, the processing unit 340 replaces the rear route point of the first partial route with the rear route point of the second partial route and then removes the second partial route.

Thereafter, as the replaced rear route point of the first partial route matches the front route point of the third partial route, the processing unit 340 writes the virtual flight plan route by concatenating the third partial route after the first partial route.

If a second-first partial route is "FRAIZ Y209 HKC" and the airway thereof matches the first partial route "BESNA Y209 FRAIZ", the processing unit 34C replaces the rear route point "FRAIZ" of the first partial route with the rear route point "HKC" of the second-first partial route and changes the first partial route to "BESNA Y209 HKC". After the change, the processing unit 340 removes the second-first partial route "FRAIZ Y209 HKC".

Thereafter, the processing unit 340 writes the virtual flight plan route "BESNA Y209 HKC Y14 TGE" by concatenating the changed first partial route "BESNA Y209 HKC" and the third partial route "HKC Y14 TGE".

Depending on the embodiment, the definition unit 330 defines the first string of the plurality of strings as the velocity and altitude of the aircraft.

For example, the definition unit 330 defines "N0449A110" firstly extracted based on spaces as the velocity and altitude of the aircraft.

The processing unit 340 writes the virtual flight plan route by connecting the velocity and altitude of the aircraft to "DCT", which represents the shortest distance, between strings, which are the first route points.

In the example described above, the processing unit 340 connects the velocity and altitude of the aircraft "N0449A110" to the written flight plan route "BESNA Y209 FRAIZ A582 HKC" with "DCT" and writes a final virtual flight plan route "N0449A110 DCT BESNA Y209 FRAIZ A582 HKC DCT".

According to an embodiment of the present disclosure, for a flight provided with brief schedule information including a flight number (or a callsign), a departure airport, an arrival airport, and a departure time, a method and device for predicting a flight plan route based on statistics of route points of previous flight plans to predict and generate a standardized virtual route is provided.

The flight plan route prediction device 300 generates a virtual route for a flight provided with schedule information according to a flight number (callsign) and a combination of a departure airport and an arrival airport.

Through this, the flight plan route prediction device 300 enables flow management of a flight only with schedule information.

The flight plan route prediction device 300 enables an air traffic simulation similar to reality using only the schedule information.

The flight plan route prediction device 30C overcomes a syntax analysis error problem due to a minor spacing error of a user.

The flight plan route prediction device 300 enables more accurate flow management by applying a standardized flight plan route that is not affected by an input scheme of each operator.

The flight plan route prediction device 300 writes a plurality of candidate virtual routes based on materials of previous flight plan routes according to the flight number (callsign) and a combination of a departure airport and an arrival airport, and selects a candidate virtual route with the highest priority to be a final virtual route by assigning priority to the plurality of candidate virtual routes in the order of statistically high occurrence frequency.

The flight plan route prediction device 300 uses a flight plan route included in previous flight plans (the period is predefined by a user) for a statistical calculation based on the materials of previous flight plan routes.

The flight plan route prediction device 300 applies a "syntax analysis step", a "route point generation step", a "statistical analysis step", and a "plan route generation step" to convert into the same type of flight plan route during the statistical analysis.

In the "syntax analysis step", the flight plan route prediction device 30C loads the AIP. extracts (based on spaces) a word constituting the flight plan route (Planned_Route), extracts (the first word) the velocity and altitude from the flight plan route (Planned_Route), corrects a word error, and assigns a type (Point, Airway, DCT) to each word.

The flight plan route prediction device 300 uses the AIP for the entire world for the syntax analysis. The flight plan route prediction device 300 uses worldwide airport, airway, and route point information from the AIP. In the airway, a list of route points constituting the airway may be stored with the ordering number.

In the flight plan route (Planned_Route), information on a route on which an aircraft passes in addition to the velocity and altitude information of the aircraft to obtain permission may be recorded.

The flight plan route may be in the form of strings and each piece of information constituting the flight plan route may be separated by a blank character (space), and thereby, the flight plan route prediction device 300 may extract each item in the form of a word based on the blank character. The flight plan route prediction device 300 may recognize the velocity and altitude information of the aircraft from the first word of the flight plan route.

Thereafter, the flight plan route prediction device 300 may recognize words after the first word as words constituting the route and may identify whether each word is included in the airway or the route point in the AIP or is the "DCT" representing the shortest travel between route points.

The flight plan route prediction device 300 may specify a name and a type of each word and the type may be defined as an airway (Airway), a route point (Point), and a DCT (DCT).

In the "route point generation step", the flight plan route prediction device 300 may generate a blank Route_Point, may add "Type=Point" to Route_Point, may discard "Type=DCT", and may add route points included in a partial section of a "Type=Airway" to Route_Point.

The flight plan route prediction device 300 may generate a route point list (Route_Point) from the flight plan route (Planned_Route).

When a type of word in a word list generated in the above syntax analysis step is a route point (Point), the flight plan route prediction device 300 may add the word to the route point list.

When the type is the airway (Airway), the flight plan route prediction device 300 may determine whether words before and after the corresponding word are route points included in the airway and may add all route points between the two route points to the route point list (Route_Point).

The generation and addition of the route point list may be performed on all flights subjected to the statistical analysis.

In the "statistical analysis step", the flight plan route prediction device 300 may generate the velocity and altitude (a mean or median value) of each callsign and a Route_Point list, and may generate the velocity and altitude (a mean or median value) of each combination of departure and arrival airports and a Route_Point list. The flight plan route prediction device 300 may generate (defined by a combination of frequency and recency, etc.) a weighted sum of the list and may sort the list in descending order.

The flight plan route prediction device 300 may group same route point lists by the flight number and may assign a score (priority) to according to the weighted sum by considering the frequency and weight with respect to a date that is close to the current date.

In addition, the flight plan route prediction device 300 may process a combination of the departure airport and the arrival airport in the same manner.

The flight plan route prediction device 300 may generate a single value of the velocity and altitude for each flight number or the combination of the departure airport and the arrival airport by calculating a mean (or a median value).

In the "planned route generation step", by performing an inverse process of the Route_Point generation step, the flight plan route prediction device 300 may group points using the same airway and may convert the points into the form of Point-Airway-Point, may assign the velocity and altitude (a mean or median value), and may provide information on time passing through major points by dividing, by the velocity, EET(Estimated Elapsed Time) information of miscellaneous information in the flight plans and distance information (provided by the AIP) between two points on the airway.

As an inverse process of the route point list generation step, the flight plan route prediction device 300 may group various route points using the same airway and may convert the route points into a {start_route_point_name airway_name end_route_point_name} format.

When two route points are consecutive without an airway, the flight plan route prediction device 300 may add "DCT", which represents the shortest connection, between the points, and when the word "DCT" is omitted at the starting and ending positions, the flight plan route prediction device 300 may add "DCT" thereto.

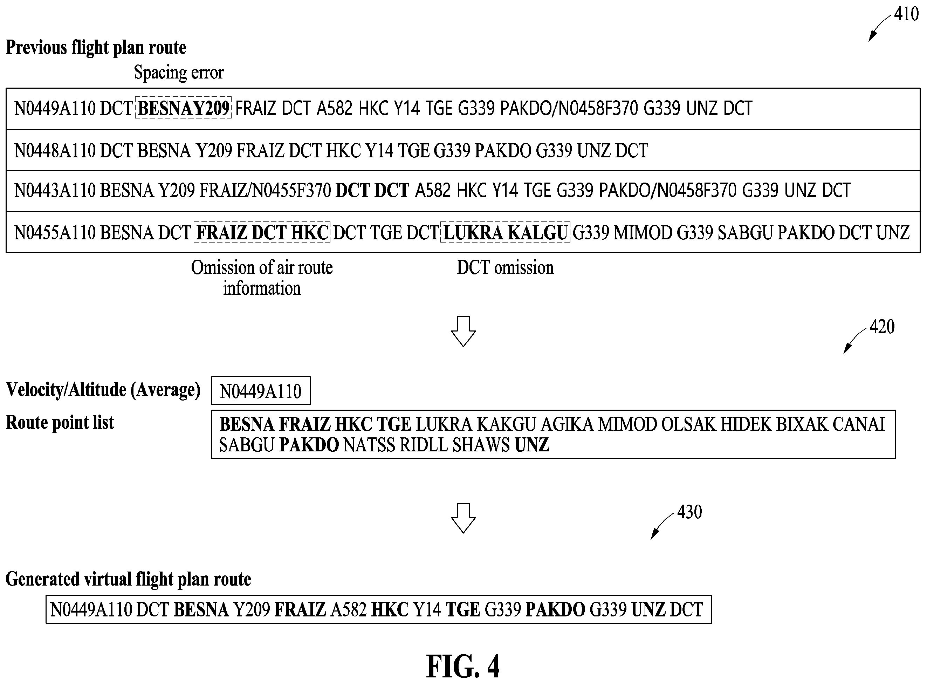

FIG. 4 is a diagram illustrating an example of predicting a virtual route according to the present disclosure.

The flight plan route prediction device 300 may analyze 410 previous flight plan routes, may identify 420 the velocity and altitude (a mean) and a route point list, and through this, may generate 430 a virtual flight plan route.

In operation 410, the flight plan route prediction device 300 may identify whether a word included in given route information is registered in an airway list and a route point (point) list in the AIP.

In the example of FIG. 4, the flight plan route prediction device 300 may determine a third word "BESNAY209" in a first item in the previous flight plan route as a spacing error. Since the flight plan route prediction device 300 fails to find "BESNAY209" in the AIP, the flight plan route prediction device 300 may determine "BESNAY209" as a spacing error.

As the flight plan route prediction device 300 identifies that FRAIZ, HKC, etc., are included in the route point list of the AIP, the flight plan route prediction device 300 may extract FRAIZ, HKC, etc., as route points, and as the flight plan route prediction device 300 identifies that A582, Y14, etc., are included in the airway list of the AIP, the flight plan route prediction device 300 may extract A582, Y14, etc., as airways.

The flight plan route prediction device 300 may determine which category (an airway, a route point) includes a term separated by spaces in the previous flight plan route.

For example, the flight plan route prediction device 300 may define FRAIZ as (Name=FRAIZ, Type=Point) and may define A582 as (Name=A582, Type=Airway).

In the case of "BESNAY209", which is identified as a spacing error, the flight plan route prediction device 300 may identify that when spacing before Y209, two words are found in the AIP by using the rule that a rule of the airway name is one alphabet followed by one to three numbers, and thereby, may divide BESNAY209 into BESNA and Y209 and may assign the name and type information in the same manner described above.

The flight plan route prediction device 300 may define the shortest distance for connecting two route points as "DCT" (Name=DCT, Type=DCT).

The flight plan route prediction device 300 may remove a part below "/" of each word since the part is not utilized in the route point statistics, wherein the part denotes a change in the velocity and altitude.

Since the first word in each sentence is velocity and altitude information, the flight plan route prediction device 300 may remove the velocity and altitude information.

The flight plan route prediction device 300 may express a previous flight plan route of FIG. 4 as a sequence of Name (Type).
- BESNA(Point) - Y209(Airway) - FRAIZ(Point) - DCT(DCT) - A582(Airway) - HKC(Point) ...
- BESNA(Point) - Y209(Airway) - FRAIZ(Point) - DCT(DCT) - HKC(Point) ...
- BESNA(Point) - Y209(Airway) - FRAIZ(Point) - DCT(DCT) - DCT(DCT) - A582(Airway)
- HKC(Point) ...
- BESNA(Point) - DCT(DCT) - FRAIZ(Point) -DCT(DCT) - HKC(Point) ...

In the Pont-Airway format information, the flight plan route prediction device 300 may add omitted information to each point.

According to a rule that a normal flight plan route repeats in the form of "Point - Airway (or DCT)", the flight plan route prediction device 300 may remove DCT from "FRAIZ(Point) - DCT(DCT) - A582(Airway) - HKC(Point)" in the first row of the previous flight plan route.

In addition, since "LUKRA KALGU" in the fourth row of the previous flight plan route is in the form of "LUKRA(Point) - KALGU(Point)", the flight plan route prediction device 300 may add DCT between the point and point.

Thereafter, the flight plan route prediction device 300 may convert a part in the form of "Point - Airway (or DCT)" into a sequence of points.

Since each airway includes a sequence of multiple points, the flight plan route prediction device 300 may find an omitted point in the airway.

In "TGE G339 PAKDO" commonly included in three previous flight plan routes of FIG. 4, Airway "G339" according to the AIP may have "LUKRA, KALGU, AGIKA, MIMOD, OLSAK, HIDEK, BIXAK, CANAI, SAGBU" points between TGE and PAKDO.

In operation 420, the flight plan route prediction device 300 may collect a route point lists from the previous flight plan route and may write a list of pure route points, "BESNA, FRAIZ, HKC, TGE, LUKRA, KALGU, AGIKA, MIMOD, OLSAK, HIDEK, BIXAK, CANAI, SAGBU, PAKDO, NATSS, RIDLL, SHAWS UAZ", from which information on the airway or DCT is removed.

In addition, the flight plan route prediction device 300 may determine that the first string "N0449A110" is the velocity and altitude (a mean) of the aircraft.

In operation 430, the flight plan route prediction device 300 may select a route having the most route points in the route point list.

In FIG. 4, the flight plan route prediction device 300 may select a route including BESNA, FRAIZ, HKC, TGE, PAKDO, UNZ, which has a relatively great number of route points in the route point list.

Since the route point list is not a standardized flight plan route, the flight plan route prediction device 300 may convert the route point list into a standardized flight plan route format.

In this case, if the flight plan route prediction device 300 finds an airway including two consecutive points using the AIP information, the flight plan route prediction device 300 may insert an airway name between two points and if not, the flight plan route prediction device 300 may insert DCT.

In the process of finding an airway including two points, if a following point is the same airway and is not a point where FIR changes, the flight plan route prediction device 300 may remove an intermediate point list and may remain the point immediately found before.

In other words, "TGE, LUKRA, KALGU, AGIKA, ..." may be reduced in the form of TGE G339 LUKRA, KALGU, AGIKA, ..." --> "TGE G339 KALGU, AGIKA, ..." --> "TGE G339 AGIKA, ...", and finally, "BESNA, FRAIZ, HKC, TGE, LUKRA, KALGU, AGIKA, MIMOD, OLSAK, HIDEK, BIXAK, CANAI, SAGBU, PAKDO, NATSS, RIDLL, SHAWS UAZ" may be in the form of "BESNAY209 FRAIZ A582 HKC Y14 TGE G339 PAKDO G339 UAZ".

The flight plan route prediction device 300 may generate a virtual flight plan route by assigning velocity and altitude information.

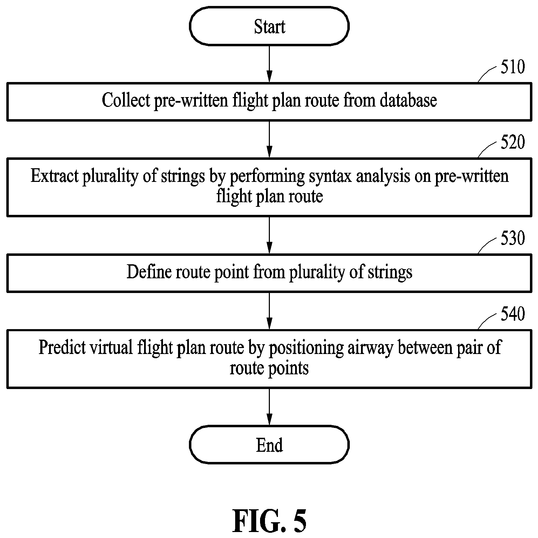

Hereinafter, in FIG. 5, a detailed description of a task flow of the flight plan route prediction device 300 based on the route point statistics of previous flight plans according to embodiments of the present disclosure is provided.

A method of predicting a flight plan route based on route point statistics of previous flight plans according to an embodiment may be performed by the flight plan route prediction device 300.

FIG. 5 is a flowchart illustrating a method of predicting a flight plan route based on statistics of route points of previous flight plans according to an embodiment of the present disclosure.

Firstly, in operation 510, the flight plan route prediction device 300 may collect a pre-written flight plan route from a database. Operation 510 may be a process of retrieving a pre-written flight plan route, which was written in a specific period in the past and is maintained in the database, from the database.

The database may store the pre-written flight plan route consisting of multiple strings including the velocity and altitude of the aircraft for each flight. In this case, the pre-written flight plan route may be grouped and matched with other flight plan routes having the same strings other than the first string, which is the velocity and altitude information of the aircraft.

In addition, in operation 520, the flight plan route prediction device 300 may extract multiple strings by performing a syntax analysis on the pre-written flight plan route. Operation 520 may be a process of analyzing a grammatical structure of the pre-written flight plan route and segmenting the string of the pre-written flight plan route, which is the component of the pre-written flight plan route, into multiple strings through parsing.

In the extraction of the string, the flight plan route prediction device 300 may extract strings based on spaces through the syntax analysis. In other words, the flight plan route prediction device 300 may extract, from the pre-written flight plan route, a word separated by spaces as an independent string.

For example, the flight plan route prediction device 300 may perform a syntax analysis on the pre-written flight plan route, "N0449A110 DCT BESNAY209 FRAIZ DCT A582 HKC Y14", and may extract strings, "N0449A110", "DCT", "BESNAY209", "FRAIZ", "DCT", "A582", "HKC", and "Y14" based on spaces.

In addition, the flight plan route prediction device 300 may search aeronautical information publication (AIP) for the extracted strings and may determine whether the string is significant in the flight plan route.

For example, the flight plan route prediction device 300 may classify the strings, "FRAIZ", "A582", "HKC", and "Y14", which are found in the AIP, as significant strings.

In this case, the AIP is a publication containing essential and permanent flight information for air navigation. The AIP is issued according to an international standard and is distributed to aviation workers and related institutions as a paper or electronic document.

On the other hand, the flight plan route prediction device 300 may classify a string that is not found in the AIP as a spacing error.

Thereafter, the flight plan route prediction device 300 may extract, from the string classified as the spacing error, n numbers (the n is a natural number less than or equal to 3) continued from one alphabet as an independent string.

In the example described above, the flight plan route prediction device 300 may classify the string "BESNAY209" that is not found in the AIP as a spacing error and from the string "BESNAY209", may extract an alphabet and three following numbers, which are Y209, as an independent string. In this case, the flight plan route prediction device 300 may search the AIP for Y209 and may classify Y209 as a significant string. In addition, the flight plan route prediction device 300 may also search the AIP for the remaining "BESNA" and may classify BESNA as a significant string.

Subsequently, in operation 530, the flight plan route prediction device 300 may define a route point from the plurality of strings. Operation 530 may be a process of reading a unique attribute possessed by each string and identifying a string that represents a route point.

Specifically, the flight plan route prediction device 300 may identify an attribute value from each of the plurality of strings based on the AIP and may define a string, of which the attribute value is identified as a "point", as the route point.

In addition, the flight plan route prediction device 300 may define a string, of which the identified attribute value is an "airway", as an airway.

In the example described above, by assigning an attribute value to an extracted string, the flight plan route prediction device 300 may define route points, "BESNA" (Point), "FRAIZ" (Point), "HKC" (Point), and may also define airways, "Y209" (Airway), "A582" (Airway), and "Y14" (Airway).

Depending on the embodiment, the flight plan route prediction device 300 may define the route point for the plurality of strings extracted in association with the pre-written flight plan route having the same first string.

For example, the flight plan route prediction device 300 may define the route points, "BESNA" (Point), "FRAIZ" (Point), "HKC" (Point), for the plurality of strings extracted in association with multiple pre-written flight plan routes starting with the first string "N0449A110".

Through this, the flight plan route prediction device 300 may define a route point for a route point extracted from a pre-written flight plan route that matches the remaining part other than the first string and may write a flight plan route to pass a route point that does not consider altitude and velocity information.

In addition, in operation 540, the flight plan route prediction device 300 may predict a virtual flight plan route by positioning an airway between a pair of route points. Operation 540 may be a process of writing a virtual flight plan route on which an aircraft travels by placing the airway between defined route points.

In this case, in preparing the flight plan route, the flight plan route prediction device 300 may add altitude and velocity information, which is the first string, by using an average value of unused altitude and velocity information.

In the prediction of the virtual flight plan route, the flight plan route prediction device 300 may write the virtual flight plan route by arranging a pair of route points by considering the order in which route points are arranged.

For this, the flight plan route prediction device 300 may recognize the arrangement order of route points according to a flight direction on the airway based on the AIP.

In the example described above, the flight plan route prediction device 300 may recognize the arrangement order of route points in the order of "BESNA" (Point), "FRAIZ" (Point), and "HKC" (Point), based on the AIP.

In addition, the flight plan route prediction device 300 may recognize the arrangement order of airways in the order of "Y209" (Airway), "A582" (Airway)', and "Y14" (Airway), based on the AIP.

In addition, the flight plan route prediction device 300 may express a partial route by positioning the string, of which the attribute value is identified as the "Airway", between a pair of strings of which the arrangement order is adjacent to each other.

For example, the flight plan route prediction device 300 may express a first partial route "BESNAY209 FRAIZ" by positioning the airway "Y209" (Airway) between the route point "BESNA" (Point) and the adjacent route point "FRAIZ" (Point) according to the arrangement order.

In addition, the flight plan route prediction device 300 may express a second partial route "FRAIZ A582 HKC" by positioning the airway "A582" (Airway) between the route point "FRAIZ" (Point) and the adjacent route point "HKC" (Point) according to the arrangement order.

In addition, the flight plan route prediction device 300 may express a third partial route "HKC Y14 TGE" by positioning the airway "Y14" (Airway) between the route point "HKC" (Point) and the adjacent route point "TGE" (Point) according to the arrangement order.

Thereafter, the flight plan route prediction device 300 may write the virtual flight plan route by concatenating the partial routes by considering the arrangement order.

The partial route may be expressed by a front route point, of which the arrangement order is early, the airway, and a rear route point of which the arrangement order is late and is adjacent to the front route point.

As the rear route point of the first partial route matches the front route point of the second partial route, the flight plan route prediction device 300 may write the virtual flight plan route by concatenating the second partial route after the first partial route.

For example, the flight plan route prediction device 300 may write the virtual flight plan route "BESNAY209 FRAIZ A582 HKC" by concatenating the first partial route "BESNAY209 FRAIZ" and the second partial route "FRAIZ A582 HKC" of which the rear route point and the front route point match each other.

In another embodiment, when the airway of the second partial route matches the airway of the first partial route, the flight plan route prediction device 300 may replace the rear route point of the first partial route with the rear route point of the second partial route and then may remove the second partial route.

Thereafter, as the replaced rear route point of the first partial route matches the front route point of the third partial route, the flight plan route prediction device 300 may write the virtual flight plan route by concatenating the third partial route after the first partial route.

If a second-first partial route is "FRAIZ Y209 HKC" and the airway thereof matches the first partial route "BESNA Y209 FRAIZ", the flight plan route prediction device 300 may replace the rear route point "FRAIZ" of the first partial route with the rear route point "HKC" of the second-first partial route and may change the first partial route to "BESNAY209 HKC". After the change, the flight plan route prediction device 300 may remove the second-first partial route "FRAIZ Y209 HKC".

Thereafter, the flight plan route prediction device 300 may write the virtual flight plan route "BESNAY209 HKC Y14 TGE" by concatenating the changed first partial route "BESNA Y209 HKC" and the third partial route "HKC Y14 TGE".

Depending on the embodiment, the flight plan route prediction device 300 may define the first string of the plurality of strings as the velocity and altitude of the aircraft.

For example, the flight plan route prediction device 300 may define "N0449A110" firstly extracted based on spaces as the velocity and altitude of the aircraft.

The flight plan route prediction device 300 may write the virtual flight plan route by connecting the velocity and altitude of the aircraft to "DCT", which represents the shortest distance, between strings, which are the first route points.

In the example described above, the flight plan route prediction device 300 may connect the velocity and altitude of the aircraft "N0449A110" to the written flight plan route "BESNAY209 FRAIZ A582 HKC" with "DCT" and may write a final virtual flight plan route "N0449A110 DCT BESNA Y209 FRAIZ A582 HKC DCT".

According to an embodiment of the present disclosure, for a flight provided with brief schedule information including a flight number (or a callsign), a departure airport, an arrival airport, and a departure time, a method and device for predicting a flight plan route based on statistics of route points of previous flight plans to predict and generate a standardized virtual route may be provided.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape, optical media such as CD-ROM discs, DVDs, and/or Blue-ray discs, magneto-optical media such as optical discs, and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter. The above-described devices may be configured to act as one or more software modules in order to perform the operations of the above-described embodiments, or vice versa.

The software may include a computer program, a piece of code, an instruction, or some combination thereof, to independently or uniformly instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

A number of embodiments have been described above. Nevertheless, it should be understood that various modifications may be made to these embodiments. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims may lie within the scope of the invention, as defined by the appended claims.

## Claims

1. A method of predicting a virtual flight plan route based on route point statistics of multiple previous flight plans, the method comprising:
collecting (510) multiple previous flight plan routes from a database;
extracting (520) a plurality of strings by performing a syntax analysis on each previous flight plan route, and identifying an attribute value from each of the plurality of strings based on an aeronautical information publication, AIP;
defining (530) route points and airways in the plurality of strings, wherein each route point is a string of which the attribute value is identified as "Point", and wherein each airway is a string of which the attribute value is identified as "Airway"; and
predicting (540) the virtual flight plan route by:
writing a plurality of candidate virtual routes based on materials of the multiple previous flight plan routes;
selecting a candidate virtual route with a highest priority to be a final virtual route by assigning priority to the plurality of candidate virtual routes in an order of statistically high occurrence frequency;
recognizing an arrangement order of the route points of the previous flight plan route corresponding to the final virtual route, according to flight directions of the airways associated with the route points, based on the AIP;
expressing partial routes, wherein each partial route is expressed by positioning one of the strings of which the attribute value is identified as "Airway" between a pair of the strings of which the attribute values are identified as "Point" and which are adjacent to each other in the arrangement order; and
writing the virtual flight plan route by concatenating multiple partial routes by considering the arrangement order;
wherein the extracting (520) of the plurality of strings comprises:
extracting the plurality of strings by performing the syntax analysis based on spacing, while classifying a string that is not found in the AIP as a spacing error; and
extracting, from the string classified as the spacing error, an independent string consisting of one letter and n numbers following the one letter, where n is a natural number less than or equal to 3.

2. The method of claim 1, wherein each partial route is expressed as a front route point, of which the arrangement order is early, the airway, and a rear route point of which the arrangement order is late and which is adjacent to the front route point, and
the writing of the virtual flight plan route comprises:
as a rear route point of a first partial route matches a front route point of a second partial route, writing the virtual flight plan route by concatenating the second partial route after the first partial route.

3. The method of claim 2, wherein the writing of the virtual flight plan route further comprises:
when an airway of the second partial route matches an airway of the first partial route,
removing the second partial route after replacing the rear route point of the first partial route with a rear route point of the second partial route; and
as a replaced rear route point of the first partial route matches a front route point of a third partial route, writing the virtual flight plan route by concatenating the third partial route after the first partial route.

4. The method of claim 1, further comprising:
defining a first string of the plurality of strings as velocity and altitude of an aircraft,
wherein the predicting (540) of the virtual flight plan route further comprises:
connecting the string representing the velocity and altitude of the aircraft to the string "DCT" related to a shortest distance.

5. A device (300) for predicting a virtual flight plan route based on route point statistics of multiple previous flight plans, the device comprising:
a collection unit (310) configured to collect multiple previous flight plan routes from a database;
an extraction unit (320) configured to extract a plurality of strings by performing a syntax analysis on each previous flight plan route, and to identify an attribute value for each of the plurality of strings based on an aeronautical information publication, AIP;
a definition unit (330) configured to define route points and airways in the plurality of strings, wherein each route point is a string of which the attribute value is identified as "Point", and wherein each airway is a string of which the attribute value is identified as "Airway"; and
a processing unit (340) configured to predict the virtual flight plan route by:
writing a plurality of candidate virtual routes based on materials of the multiple previous flight plan routes;
selecting a candidate virtual route with a highest priority to be a final virtual route by assigning priority to the plurality of candidate virtual routes in an order of statistically high occurrence frequency;
recognizing an arrangement order of the route points of the previous flight plan route corresponding to the final virtual route, according to flight directions of the airways associated with the route points, based on the AIP;
recognizing an arrangement order of the route points according to flight directions of the airways associated with the route points, based on the AIP,
expressing partial routes, wherein each partial route is expressed by positioning one of the strings of which the attribute value is identified as "Airway" between a pair of the strings of which the attribute values are identified as "Point" and which are adjacent to each other in the arrangement order, and
writing the virtual flight plan route by concatenating multiple partial routes by considering the arrangement order;
wherein the extraction unit (320) is further configured to:
extract the plurality of strings by performing the syntax analysis based on spacing, while classifying a string that is not found in the AIP as a spacing error; and
extract, from the string classified as the spacing error, an independent string consisting of one letter and n numbers following the one letter, where n is a natural number less than or equal to 3.

6. The device (300) of claim 5, wherein each partial route is expressed as a front route point, of which the arrangement order is early, the airway, and a rear route point of which the arrangement order is late and which is adjacent to the front route point, and
the processing unit is further configured to:
as a rear route point of a first partial route matches a front route point of a second partial route, write the virtual flight plan route by concatenating the second partial route after the first partial route.

7. The device (300) of claim 6, wherein the processing unit (340) is further configured to:
when an airway of the second partial route matches an airway of the first partial route,
remove the second partial route after replacing the rear route point of the first partial route with a rear route point of the second partial route, and
as a replaced rear route point of the first partial route matches a front route point of a third partial route, write the virtual flight plan route by concatenating the third partial route after the first partial route.

8. The device (300) of claim 5, wherein the definition unit (330) is further configured to:
define a first string of the plurality of strings as velocity and altitude of an aircraft, and
the processing unit (340) is further configured to:
write the virtual flight plan route by connecting the string representing the velocity and altitude of the aircraft to the string "DCT" related to a shortest distance.

## Patentansprüche

1. Verfahren zum Vorhersagen einer virtuellen Flugplanroute auf Basis von Routenpunktstatistiken mehrerer vorhergehender Flugpläne, wobei das Verfahren Folgendes umfasst:
Erfassen (510) mehrerer vorhergehender Flugplanrouten aus einer Datenbank;
Extrahieren (520) einer Vielzahl von Zeichenketten durch Durchführen einer Syntaxanalyse jeder vorhergehenden Flugplanroute und Identifizieren eines Attributwerts in jeder der Vielzahl von Zeichenketten auf Basis eines Luftfahrthandbuchs, AIP;
Definieren (530) von Routenpunkten und Flugstrecken in der Vielzahl von Zeichenketten, wobei es sich bei jedem Routenpunkt um eine Zeichenkette handelt, deren Attributwert als "Punkt" identifiziert ist, und wobei es sich bei jeder Flugstrecke um eine Zeichenkette handelt, deren Attributwert als "Flugstrecke" identifiziert ist; und
Vorhersagen (540) der virtuellen Flugplanroute durch:
Schreiben einer Vielzahl von virtuellen Kandidatenrouten auf Basis von Materialien der mehreren vorhergehenden Flugplanrouten;
Auswählen einer virtuellen Kandidatenroute mit einer höchsten Priorität als eine endgültige virtuelle Route durch Zuweisen von Priorität an die Vielzahl von virtuellen Kandidatenrouten in einer Reihenfolge statistisch hoher Auftrittshäufigkeit;
Erkennen einer Anordnungsreihenfolge der Routenpunkte der vorhergehenden Flugplanroute, die der endgültigen virtuellen Route entspricht, gemäß Flugrichtungen der den Routenpunkten zugeordneten Flugstrecken auf Basis des AIP;
Ausdrücken von Teilrouten, wobei jede Teilroute durch Positionieren einer der Zeichenketten, deren Attributwert als "Flugstrecke" identifiziert ist, zwischen einem Paar der Zeichenketten, deren Attributwert als "Punkt" identifiziert ist und die in der Anordnungsreihenfolge benachbart zueinander liegen, ausgedrückt wird; und
Schreiben der virtuellen Flugplanroute durch Verketten mehrerer Teilrouten unter Berücksichtigung der Flugstrecke;
wobei das Extrahieren (520) der Vielzahl von Zeichenketten Folgendes umfasst:
Extrahieren der Vielzahl von Zeichenketten durch Durchführen einer Syntaxanalyse auf Basis von Leerzeichen, wobei eine nicht in dem AIP gefundene Zeichenkette als Leerzeichenfehler klassifiziert wird; und
Extrahieren einer unabhängigen Zeichenkette, bestehend aus einem Buchstaben und n Zahlen nach dem einen Buchstaben, aus der als Leerzeichenfehler klassifizierten Zeichenkette, wobei n eine natürliche Zahl kleiner als oder gleich 3 ist.

2. Verfahren nach Anspruch 1, wobei jede Teilroute als ein vorderer Routenpunkt, dessen Anordnungsreihenfolge früh ist, die Flugstrecke und ein hinterer Routenpunkt, dessen Anordnungsreihenfolge spät ist und der benachbart zu dem vorderen Routenpunkt ist, ausgedrückt wird und
das Schreiben der virtuellen Flugplanroute Folgendes umfasst:
wenn ein hinterer Routenpunkt einer ersten Teilroute mit einem vorderen Routenpunkt einer zweiten Teilroute übereinstimmt, Schreiben der virtuellen Flugplanroute durch Verketten der zweiten Teilroute nach der ersten Teilroute.

3. Verfahren nach Anspruch 2, wobei das Schreiben der virtuellen Flugplanroute ferner Folgendes umfasst:
wenn eine Flugstrecke der zweiten Teilroute mit einer Flugstrecke der ersten Teilroute übereinstimmt,
Entfernen der zweiten Teilroute nach Ersetzen des hinteren Routenpunkts der ersten Teilroute durch einen hinteren Routenpunkt der zweiten Teilroute; und
wenn ein ersetzter hinterer Routenpunkt der ersten Teilroute mit einem vorderen Routenpunkt einer dritten Teilroute übereinstimmt, Schreiben der virtuellen Flugplanroute durch Verketten der dritten Teilroute nach der ersten Teilroute.

4. Verfahren nach Anspruch 1, ferner umfassend:
Definieren einer ersten Zeichenkette der Vielzahl von Zeichenketten als Geschwindigkeit und Flughöhe eines Luftfahrzeugs,
wobei das Vorhersagen (540) der virtuellen Flugplanroute ferner Folgendes umfasst:
Verbinden der die Geschwindigkeit und Flughöhe des Luftfahrzeugs darstellenden Zeichenkette mit der die kürzeste Entfernung betreffenden Zeichenkette "DCT".

5. Vorrichtung (300) zum Vorhersagen einer virtuellen Flugplanroute auf Basis von Routenpunktstatistiken mehrerer vorhergehender Flugpläne, wobei die Vorrichtung Folgendes umfasst:
eine Erfassungseinheit (310), die zum Erfassen mehrerer vorhergehender Flugplanrouten aus einer Datenbank konfiguriert ist;
eine Extraktionseinheit (320), die zum Extrahieren einer Vielzahl von Zeichenketten durch Durchführen einer Syntaxanalyse jeder vorhergehenden Flugplanroute und Identifizieren eines Attributwerts für jede der Vielzahl von Zeichenketten auf Basis eines Luftfahrthandbuchs, AIP, konfiguriert ist;
eine Definitionseinheit (330), die zum Definieren von Routenpunkten und Flugstrecken in der Vielzahl von Zeichenketten konfiguriert ist, wobei es sich bei jedem Routenpunkt um eine Zeichenkette handelt, deren Attributwert als "Punkt" identifiziert ist, und wobei es sich bei jeder Flugstrecke um eine Zeichenkette handelt, deren Attributwert als "Flugstrecke" identifiziert ist; und
eine Verarbeitungseinheit (340), die zum Vorhersagen der virtuellen Flugplanroute durch Folgendes konfiguriert ist:
Schreiben einer Vielzahl von virtuellen Kandidatenrouten auf Basis von Materialien der mehreren vorhergehenden Flugplanrouten;
Auswählen einer virtuellen Kandidatenroute mit einer höchsten Priorität als eine endgültige virtuelle Route durch Zuweisen von Priorität an die Vielzahl von virtuellen Kandidatenrouten in einer Reihenfolge statistisch hoher Auftrittshäufigkeit;
Erkennen einer Anordnungsreihenfolge der Routenpunkte der vorhergehenden Flugplanroute, die der endgültigen virtuellen Route entspricht, gemäß Flugrichtungen der den Routenpunkten zugeordneten Flugstrecken auf Basis des AIP;
Erkennen einer Anordnungsreihenfolge der Routenpunkte gemäß Flugrichtungen der den Routenpunkten zugeordneten Flugstrecken auf Basis des AIP,
Ausdrücken von Teilrouten, wobei jede Teilroute durch Positionieren einer der Zeichenketten, deren Attributwert als "Flugstrecke" identifiziert ist, zwischen einem Paar der Zeichenketten, deren Attributwert als "Punkt" identifiziert ist und die in der Anordnungsreihenfolge benachbart zueinander liegen, ausgedrückt wird, und
Schreiben der virtuellen Flugplanroute durch Verketten mehrerer Teilrouten unter Berücksichtigung der Flugstrecke;
wobei die Extraktionseinheit (320) ferner zu Folgendem konfiguriert ist:
Extrahieren der Vielzahl von Zeichenketten durch Durchführen einer Syntaxanalyse auf Basis von Leerzeichen, wobei eine nicht in dem AIP gefundene Zeichenkette als Leerzeichenfehler klassifiziert wird; und
Extrahieren einer unabhängigen Zeichenkette, bestehend aus einem Buchstaben und n Zahlen nach dem einen Buchstaben, aus der als Leerzeichenfehler klassifizierten Zeichenkette, wobei n eine natürliche Zahl kleiner als oder gleich 3 ist.

6. Vorrichtung (300) nach Anspruch 5, wobei jede Teilroute als ein vorderer Routenpunkt, dessen Anordnungsreihenfolge früh ist, die Flugstrecke und ein hinterer Routenpunkt, dessen Anordnungsreihenfolge spät ist und der benachbart zu dem vorderen Routenpunkt ist, ausgedrückt wird und
die Verarbeitungseinheit ferner zu Folgendem konfiguriert ist:
wenn ein hinterer Routenpunkt einer ersten Teilroute mit einem vorderen Routenpunkt einer zweiten Teilroute übereinstimmt, Schreiben der virtuellen Flugplanroute durch Verketten der zweiten Teilroute nach der ersten Teilroute.

7. Vorrichtung (300) nach Anspruch 6, wobei die Verarbeitungseinheit (340) ferner zu Folgendem konfiguriert ist:
wenn eine Flugstrecke der zweiten Teilroute mit einer Flugstrecke der ersten Teilroute übereinstimmt,
Entfernen der zweiten Teilroute nach Ersetzen des hinteren Routenpunkts der ersten Teilroute durch einen hinteren Routenpunkt der zweiten Teilroute und
wenn ein ersetzter hinterer Routenpunkt der ersten Teilroute mit einem vorderen Routenpunkt einer dritten Teilroute übereinstimmt, Schreiben der virtuellen Flugplanroute durch Verketten der dritten Teilroute nach der ersten Teilroute.

8. Vorrichtung (300) nach Anspruch 5, wobei die Definitionseinheit (330) ferner zu Folgendem konfiguriert ist:
Definieren einer ersten Zeichenkette der Vielzahl von Zeichenketten als Geschwindigkeit und Flughöhe eines Luftfahrzeugs und
die Verarbeitungseinheit (340) ferner zu Folgendem konfiguriert ist:
Schreiben der virtuellen Flugplanroute durch Verbinden der die Geschwindigkeit und Flughöhe des Luftfahrzeugs darstellenden Zeichenkette mit der die kürzeste Entfernung betreffenden Zeichenkette "DCT".

## Revendications

1. Procédé de prédiction d'un itinéraire de plan de vol virtuel basé sur des statistiques de point de trajet de multiples plans de vol précédents, le procédé comprenant :
la collecte (510) de multiples itinéraires de plan de vol précédents à partir d'une base de données ;
l'extraction (520) d'une pluralité de chaînes par la réalisation d'une analyse syntaxique sur chaque itinéraire de plan de vol précédent et l'identification d'une valeur d'attribut à partir de chacune de la pluralité de chaînes sur la base d'une publication d'information aéronautique, AIP ;
la définition (530) de points de trajet et de voies aériennes dans la pluralité de chaînes, dans lequel chaque point de trajet est une chaîne dont la valeur d'attribut est identifiée comme « Point », et dans lequel chaque voie aérienne est une chaîne dont la valeur d'attribut est identifiée comme « Voie aérienne » ; et
la prédiction (540) de l'itinéraire de plan de vol virtuel par :
l'écriture d'une pluralité d'itinéraires virtuels candidats sur la base d'éléments des multiples itinéraires de plan de vol précédents ;
la sélection d'un itinéraire virtuel candidat ayant la priorité la plus élevée pour être un itinéraire virtuel final par l'attribution d'une priorité à la pluralité d'itinéraires virtuels candidats dans un ordre de fréquence d'occurrence statistiquement élevée ;
la reconnaissance d'un ordre d'agencement des points de trajet de l'itinéraire de plan de vol précédent correspondant à l'itinéraire virtuel final, selon les directions de vol des voies aériennes associées aux points de trajet, sur la base de l'AIP ;
l'expression d'itinéraires partiels, dans lequel chaque itinéraire partiel est exprimé par le positionnement de l'une des chaînes dont la valeur d'attribut est identifiée comme « Voie aérienne » entre une paire des chaînes dont les valeurs d'attribut sont identifiées comme « Point » et qui sont adjacentes l'une à l'autre dans l'ordre d'agencement ; et
l'écriture de l'itinéraire de plan de vol virtuel par la concaténation de multiples itinéraires partiels en tenant compte de l'ordre d'agencement ;
dans lequel l'extraction (520) de la pluralité de chaînes comprend :
l'extraction de la pluralité de chaînes par la réalisation de l'analyse syntaxique sur la base de l'espacement, tout en classant une chaîne qui n'est pas trouvée dans l'AIP comme une erreur d'espacement ; et
l'extraction, de la chaîne classée comme erreur d'espacement, d'une chaîne indépendante composée d'une lettre et de n nombres suivant la lettre, où n est un nombre naturel inférieur ou égal à 3.

2. Procédé selon la revendication 1, dans lequel chaque itinéraire partiel est exprimé en tant que point de trajet avant, dont l'ordre d'agencement est antérieur, la voie aérienne, et en tant que point de trajet arrière dont l'ordre d'agencement est postérieur et qui est adjacent au point de trajet avant, et l'écriture de l'itinéraire de plan de vol virtuel comprend :
alors qu'un point de trajet arrière d'un premier itinéraire partiel correspond à un point de trajet avant d'un deuxième itinéraire partiel, l'écriture de l'itinéraire de plan de vol virtuel par la concaténation du deuxième itinéraire partiel après le premier itinéraire partiel.

3. Procédé selon la revendication 2, dans lequel l'écriture de l'itinéraire de plan de vol virtuel comprend en outre :
lorsqu'une voie aérienne du deuxième itinéraire partiel correspond à une voie aérienne du premier itinéraire partiel,
la suppression du deuxième itinéraire partiel après le remplacement du point de trajet arrière du premier itinéraire partiel par un point de trajet arrière du deuxième itinéraire partiel ; et
alors qu'un point de trajet arrière remplacé du premier itinéraire partiel correspond à un point de trajet avant d'un troisième itinéraire partiel, l'écriture de l'itinéraire de plan de vol virtuel par la concaténation du troisième itinéraire partiel après le premier itinéraire partiel.

4. Procédé selon la revendication 1, comprenant en outre :
la définition d'une première chaîne de la pluralité de chaînes comme la vitesse et l'altitude d'un aéronef,
dans lequel la prédiction (540) de l'itinéraire de plan de vol virtuel comprend en outre :
la connexion de la chaîne représentant la vitesse et l'altitude de l'aéronef à la chaîne « DCT » relative à la distance la plus courte.

5. Dispositif (300) de prédiction d'un itinéraire de plan de vol virtuel basé sur des statistiques de point de trajet de multiples plans de vol précédents, le dispositif comprenant :
une unité de collecte (310) configurée pour collecter de multiples itinéraires de plan de vol précédents à partir d'une base de données ;
une unité d'extraction (320) configurée pour extraire une pluralité de chaînes par la réalisation d'une analyse syntaxique sur chaque itinéraire de plan de vol précédent et pour identifier une valeur d'attribut pour chacune de la pluralité de chaînes sur la base d'une publication d'information aéronautique, AIP ;
une unité de définition (330) configurée pour définir des points de trajet et des voies aériennes dans la pluralité de chaînes, dans lequel chaque point de trajet est une chaîne dont la valeur d'attribut est identifiée comme « Point », et dans lequel chaque voie aérienne est une chaîne dont la valeur d'attribut est identifiée comme « Voie aérienne » ; et
une unité de traitement (340) configurée pour prédire l'itinéraire de plan de vol virtuel par :
l'écriture d'une pluralité d'itinéraires virtuels candidats sur la base d'éléments des multiples itinéraires de plan de vol précédents ;
la sélection d'un itinéraire virtuel candidat ayant la priorité la plus élevée pour être un itinéraire virtuel final par l'attribution d'une priorité à la pluralité d'itinéraires virtuels candidats dans un ordre de fréquence d'occurrence statistiquement élevée ;
la reconnaissance d'un ordre d'agencement des points de trajet de l'itinéraire de plan de vol précédent correspondant à l'itinéraire virtuel final, selon les directions de vol des voies aériennes associées aux points de trajet, sur la base de l'AIP ;
la reconnaissance d'un ordre d'agencement des points de trajet selon les directions de vol des voies aériennes associées aux points de trajet, sur la base de l'AIP,
l'expression d'itinéraires partiels, dans lequel chaque itinéraire partiel est exprimé par le positionnement de l'une des chaînes dont la valeur d'attribut est identifiée comme « Voie aérienne » entre une paire des chaînes dont les valeurs d'attribut sont identifiées comme « Point » et qui sont adjacentes l'une à l'autre dans l'ordre d'agencement, et
l'écriture de l'itinéraire de plan de vol virtuel par la concaténation de multiples itinéraires partiels en tenant compte de l'ordre d'agencement ;
dans lequel l'unité d'extraction (320) est en outre configurée pour :
extraire la pluralité de chaînes par la réalisation de l'analyse syntaxique sur la base de l'espacement, tout en classant une chaîne qui n'est pas trouvée dans l'AIP comme une erreur d'espacement ; et
extraire, de la chaîne classée comme erreur d'espacement, une chaîne indépendante composée d'une lettre et de n nombres suivant la lettre, où n est un nombre naturel inférieur ou égal à 3.

6. Dispositif (300) selon la revendication 5, dans lequel chaque itinéraire partiel est exprimé en tant que point de trajet avant, dont l'ordre d'agencement est antérieur, la voie aérienne, et en tant que point de trajet arrière dont l'ordre d'agencement est postérieur et qui est adjacent au point de trajet avant, et l'unité de traitement est en outre configurée en outre pour :
alors qu'un point de trajet arrière d'un premier itinéraire partiel correspond à un point de trajet avant d'un deuxième itinéraire partiel, écrire l'itinéraire de plan de vol virtuel par la concaténation du deuxième itinéraire partiel après le premier itinéraire partiel.

7. Dispositif (300) selon la revendication 6, dans lequel l'unité de traitement (340) est en outre configurée pour :
lorsqu'une voie aérienne du deuxième itinéraire partiel correspond à une voie aérienne du premier itinéraire partiel, supprimer le deuxième itinéraire partiel après le remplacement du point de trajet arrière du premier itinéraire partiel par un point de trajet arrière du deuxième itinéraire partiel ; et
alors qu'un point de trajet arrière remplacé du premier itinéraire partiel correspond à un point de trajet avant d'un troisième itinéraire partiel, écrire l'itinéraire de plan de vol virtuel par la concaténation du troisième itinéraire partiel après le premier itinéraire partiel.

8. Dispositif (300) selon la revendication 5, dans lequel l'unité de définition (330) est en outre configurée pour :
définir une première chaîne de la pluralité de chaînes comme la vitesse et l'altitude d'un aéronef, et
l'unité de traitement (340) est en outre configurée en outre pour :
écrire l'itinéraire de plan de vol virtuel par la connexion de la chaîne représentant la vitesse et l'altitude de l'aéronef à la chaîne « DCT » relative à la distance la plus courte.
